(19) **Europäisches Patentamt / European Patent Office / Office européen des brevets**

(11) **EP 3 554 860 B1**

(12) **FASCICULE DE BREVET EUROPEEN**

(45) Date de publication et mention
de la délivrance du brevet:
**03.02.2021 Bulletin 2021/05**

(21) Numéro de dépôt: **17816963.7**

(22) Date de dépôt: **01.12.2017**

(51) Int Cl.:
*B60C 19/12* (2006.01)     *B29C 73/16* (2006.01)
*B29C 73/22* (2006.01)     *B29D 30/06* (2006.01)

(86) Numéro de dépôt international:
**PCT/FR2017/053350**

(87) Numéro de publication internationale:
**WO 2018/109305 (21.06.2018 Gazette 2018/25)**

(54) **ENSEMBLE DE BANDAGE PNEUMATIQUE ET DE ROUE COMPRENANT UN PRODUIT AUTO-OBTURANT AMÉLIORÉ**

ANORDNUNG AUS REIFENKARKASSE UND RAD MIT VERBESSERTEM SELBSTVERSIEGELNDEM PRODUKT

TYRE CASING AND WHEEL ASSEMBLY COMPRISING AN ENHANCED SELF-SEALING PRODUCT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2016 FR 1662665**

(43) Date de publication de la demande:
**23.10.2019 Bulletin 2019/43**

(73) Titulaire: **Compagnie Générale des Etablissements Michelin**
**63000 Clermont-Ferrand (FR)**

(72) Inventeurs:
• **BRUANT, Rémi**
**63040 Clermont-Ferrand Cedex 9 (FR)**

• **CAREME, Christopher**
**63040 Clermont-Ferrand Cedex 9 (FR)**
• **CECCIA, Simona**
**63040 Clermont-Ferrand Cedex 9 (FR)**
• **MERINO LOPEZ, José**
**63040 Clermont-Ferrand Cedex 9 (FR)**

(74) Mandataire: **Desbordes, Guillaume**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**DE-A1- 19 839 911     FR-A1- 2 923 750**
**US-A- 3 563 294**

EP 3 554 860 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne le domaine des ensembles de pneumatique et de roue.

Elle concerne plus particulièrement un ensemble de pneumatique et de roue résistant aux effets d'une crevaison.

De façon usuelle, un pneumatique ou bandage pneumatique comprend une couche interne d'étanchéité délimitant le volume interne du bandage pneumatique.

Lors de son utilisation, le bandage pneumatique peut subir une perforation, par exemple du fait de la pénétration d'un objet perforant tel qu'une vis ou un clou, pouvant entraîner sa mise à plat plus ou moins brutale. On connait, dans l'art antérieur, au moins deux solutions pour pallier les conséquences d'une perforation d'un bandage pneumatique.

La première solution, dite préventive, consiste à disposer au contact de la couche interne d'étanchéité, lors de la fabrication du bandage pneumatique, une couche additionnelle d'un produit de très faible rigidité et pouvant se déformer facilement. En effet, lorsqu'une perforation survient, le produit de la couche additionnelle, en raison de sa souplesse et de sa capacité à se déformer facilement, enrobe l'objet perforant et en cas de retrait de celui-ci pénètre dans la perforation, comble celle-ci et limite ou évite ainsi une fuite d'air résultat de la perforation du bandage pneumatique. Un tel produit, appelé produit auto-obturant solide, est par exemple décrit dans le document WO 2012/052663.

La seconde solution, dite curative, consiste à injecter, après une perforation, un produit liquide comportant des agents de colmatage tels des fibres ou des particules de caoutchouc dans le bandage pneumatique. Ce produit vient alors pénétrer dans la perforation et limite ou évite une fuite d'air résultat de la crevaison du bandage pneumatique. Un tel produit, appelé produit auto-obturant liquide ou produit anti-crevaison, est par exemple décrit dans le document WO 2011/148853 ou FR 2 923 750.

Des bandages pneumatiques équipés d'un produit auto-obturant solide mis en place dans la cavité interne en regard du sommet sous forme d'une couche de 3 à 5 mm d'épaisseur sont maintenant commercialisés. On constate cependant que ces bandages pneumatiques présentent une performance insuffisante avec certains types d'objets perforants, tels des vis.

Pour pallier ce problème, on peut naturellement essayer d'augmenter l'épaisseur de la couche de produit auto-obturant solide jusqu'à par exemple 6 à 7 mm. Toutefois, cette solution ne règle pas complètement le problème et pénalise les performances du bandage pneumatique, notamment en augmentant sensiblement sa résistance au roulement et en diminuant son endurance en raison de l'échauffement supérieur du sommet lié à la couche épaisse de produit auto-obturant.

L'invention a donc pour but de fournir un ensemble bandage pneumatique et roue comprenant un produit auto-obturant plus efficace que les solutions de l'art antérieur sans entraîner les déchéances rappelées ci-dessus.

A cet effet, l'invention concerne un ensemble d'un bandage pneumatique et d'une roue, le bandage pneumatique étant monté sur la roue, l'ensemble comprenant des premier et second produits auto-obturants logés dans le volume interne du bandage pneumatique,

le premier produit auto-obturant, dit produit auto-obturant solide, formant une couche contre une partie prédéterminée de la surface interne du bandage pneumatique, la position relative de cette partie prédéterminée dans le bandage pneumatique ne variant sensiblement pas sous l'effet de la gravité,

le second produit auto-obturant, dit produit auto-obturant liquide, étant sous forme liquide, la position relative du second produit variant sous l'effet de la gravité dans le volume interne (V) du bandage pneumatique (10) pour permettre d'agir de façon simultanée avec le premier produit auto-obturant.

Les inventeurs ont observé, en réalisant des tests de perforation de bandages de pneumatiques, que l'efficacité d'un produit auto-obturant solide ou liquide pour combler la perforation dépendait de la géométrie de cette perforation, mais également du moment où l'objet perforant était retiré du bandage pneumatique.

Ainsi, les inventeurs ont remarqué qu'un produit auto-obturant liquide, du fait de sa haute capacité à fluer, avait tendance à s'échapper hors du bandage pneumatique au moment du retrait de l'objet, ce qui était moins le cas du produit auto-obturant solide, qui au contraire parvenait dans ce laps de temps à combler la perforation. En revanche, les inventeurs ont remarqué qu'un produit auto-obturant solide, du fait de sa moindre capacité à fluer par rapport à un produit auto-obturant liquide, parvenait plus difficilement combler tout le volume d'une perforation due à la pénétration d'un objet perforant de forme complexe tel qu'une vis.

A l'aide de ces observations, les inventeurs ont pu déterminer que les produits auto-obturants solide et liquide, habituellement utilisés de façon mutuellement exclusive (le premier étant utilisé à titre préventif et le second à titre curatif), avaient des propriétés complémentaires. Ils ont donc eu l'idée de les intégrer dans un ensemble monté de manière à ce qu'ils puissent agir de façon simultanée, au moment où la perforation survient.

Grâce à l'utilisation conjointe d'un produit auto-obturant solide et d'un produit auto-obturant liquide, on obtient des performances de comblement de la perforation nettement plus élevées que celles obtenues avec chaque produit utilisé de façon séparée, du fait d'un effet de synergie entre les deux catégories de produit.

De préférence, le produit auto-obturant liquide a une épaisseur équivalente e comprise entre 0,3 et 2,5mm, cette épaisseur équivalente étant définie par la relation $e = \dfrac{m}{LD\gamma}$ dans laquelle :

$m$ est la masse de produit auto-obturant liquide,
$L$ est la largeur de la bande de roulement du bandage pneumatique,
$D$ est le développement interne du bandage pneumatique, et
$\gamma$ est la densité du produit auto-obturant liquide.

Avantageusement, l'épaisseur équivalente du produit auto-obturant liquide est comprise entre 0,4 et 1,5 mm, de préférence entre 0,5 et 1,2 mm.

Selon un mode de réalisation particulier de l'invention, la viscosité dynamique du produit auto-obturant liquide est inférieure à 1000 Pa.s dans une plage de température comprise entre -15°C et 60°C, par exemple inférieure à 100 Pa.s, et de préférence supérieure à 0,01 Pa.s.

De préférence, la couche de produit auto-obturant solide a une épaisseur inférieure à 5 mm, de préférence comprise entre 2,5 et 3,5 mm.

Selon un mode de réalisation particulier de l'invention, la surface interne du bandage pneumatique est constituée d'une couche d'étanchéité, la couche d'étanchéité comportant par exemple du caoutchouc butyle.

Selon un mode de réalisation particulier de l'invention, la partie prédéterminée recouverte par le produit auto-obturant solide est une partie en regard du sommet du pneumatique.

Afin de favoriser l'obturation, le produit auto-obturant liquide comprend des agents de colmatage tels que des fibres et des particules de caoutchouc dispersées dans un solvant liquide, le solvant liquide comportant par exemple de l'eau.

Selon un mode de réalisation particulier de l'invention, le produit auto-obturant liquide comporte un latex de caoutchouc naturel dans une base aqueuse.

Afin d'éviter le gel du produit auto-obturant liquide, le produit auto-obturant liquide comprend un antigel à base de glycol.

Afin de favoriser encore davantage l'obturation, le produit auto-obturant liquide comprend des particules de diamètre compris entre 10 et 800 $\mu$m, par exemple des poudrettes de caoutchouc obtenues par broyage de pneumatiques usagés, le diamètre de plus de 70% des particules en nombre étant de préférence compris entre 10 et 300 $\mu$m.

Avantageusement, le produit auto-obturant solide comprend un élastomère majoritaire choisi parmi :

- un élastomère diénique insaturé,
- un élastomère à base de butyle,
- un élastomère thermoplastique, par exemple un élastomère styrénique ou un copolymère thermoplastique à blocs polystyrène et polyisobutylène, et
- un polyuréthane.

De préférence, l'élastomère majoritaire étant un élastomère diénique insaturé, le produit auto-obturant solide comprend en outre entre 30 et 90 pce d'une résine hydrocarbonée et entre 0 et 30 pce d'une charge.

De préférence, l'élastomère majoritaire étant un élastomère diénique insaturé, le produit auto-obturant solide comprend en outre un plastifiant liquide à un taux compris entre 0 et 60 pce ou comprend en outre entre 0,5 et 15 pce de polysulfure de thiurame.

Selon un mode de réalisation particulier de l'invention, l'élastomère majoritaire étant un élastomère à base de butyle, l'élastomère majoritaire est un caoutchouc butyle de haute masse moléculaire, et le produit auto-obturant solide comprend en outre un élastomère butyle de basse masse moléculaire.

De préférence, la masse moléculaire en nombre du caoutchouc butyle de haute masse moléculaire est supérieure à 120 000 g/ml et de préférence supérieure à 150 000 g/ml.

Selon un mode de réalisation particulier de l'invention, l'élastomère majoritaire étant un élastomère thermoplastique, le produit auto-obturant solide comprend en outre une huile d'extension à un taux d'au moins 100 pce, et de préférence supérieur à 250 pce

De préférence, le produit auto-obturant solide a une dureté Shore00 inférieure à 10 et préférentiellement égale à 0.

L'invention concerne également un procédé de fabrication d'un ensemble d'un bandage pneumatique et d'une roue, l'ensemble étant selon l'invention, procédé au cours duquel on loge le produit auto-obturant liquide dans le bandage pneumatique avant son montage sur la roue.

L'invention concerne également un procédé de fabrication d'un ensemble d'un bandage pneumatique et d'une roue, l'ensemble étant selon l'invention, procédé au cours duquel on introduit le produit auto-obturant liquide dans le bandage pneumatique après son montage dans la roue par une valve de gonflage du bandage pneumatique et avant le gonflage du bandage pneumatique.

L'invention concerne également un procédé de mise en place d'un système auto-obturant dans un ensemble d'un bandage pneumatique et d'une roue, l'ensemble étant selon l'invention, le procédé comportant les étapes suivantes :

on prend un pneumatique équipé d'une couche comprenant le produit auto-obturant solide ;
on monte le pneumatique sur une jante de roue pour obtenir un ensemble pneumatique et roue définissant un volume interne ;
on introduit dans le volume interne le produit auto-obturant liquide.

Selon un mode de réalisation particulier de l'invention, on introduit le produit auto-obturant liquide dans le volume interne du pneumatique avant le montage du pneumatique sur la jante de roue.

Selon un mode de réalisation particulier de l'invention, l'ensemble d'un bandage pneumatique et d'une roue étant muni une valve de gonflage, on introduit le produit auto-obturant liquide après le montage du pneumatique sur la jante de roue à travers ladite valve de gonflage.

L'invention sera mieux comprise à la lecture de la description qui va suivre, donnée uniquement à titre d'exemple non limitatif et faite en se référant aux dessins dans lesquels :

- la figure 1 est une vue en coupe radiale d'un bandage pneumatique selon l'invention ;
- la figure 2 (art antérieur) est une vue schématique en coupe d'un bandage pneumatique muni d'une couche de produit auto-obturant solide selon l'art antérieur, percé par une vis ;
- la figure 3 (art antérieur) est une vue similaire à la figure 2, la vis ayant été retirée du bandage après un laps de temps prédéterminé ;
- la figure 4 (art antérieur) est une vue similaire à la figure 2 d'un bandage pneumatique muni d'une couche de produit auto-obturant liquide selon l'art antérieur, percé par une vis ;
- la figure 5 (art antérieur) est une vue similaire à la figure 2, la vis ayant été retirée du bandage ;
- la figure 6 (art antérieur) est une vue similaire à la figure 5, la vis ayant été retirée du bandage, après un laps de temps prédéterminé ;
- la figure 7 est une vue similaire à la figure 2 d'un bandage pneumatique muni d'une couche de produit auto-obturant solide et d'une couche de produit auto-obturant liquide selon l'invention ;
- la figure 8 est une vue similaire à la figure 7, la vis ayant été retirée du bandage ;

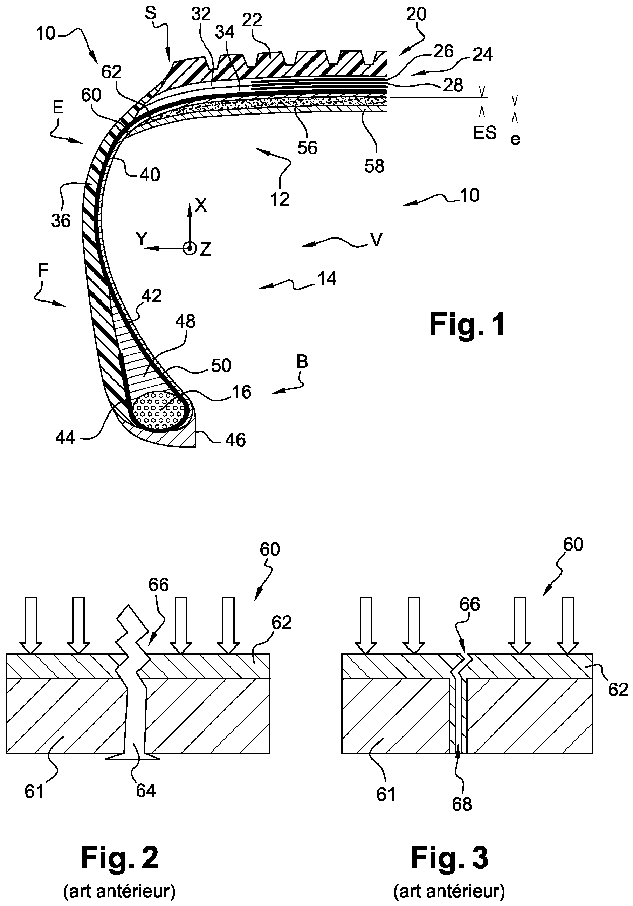

On a représenté sur la figure 1 un bandage pneumatique selon un mode de réalisation de l'invention désigné par la référence générale 10.

Sur cette figure, on a représenté des axes X, Y, Z orthogonaux entre eux correspondant aux orientations habituelles radiale (X), axiale (Y) et circonférentielle (Z) du bandage pneumatique 10.

Le bandage pneumatique 10 fait partie d'un ensemble d'un bandage pneumatique et d'une roue sur laquelle il est destiné à être monté. La roue, qui peut notamment être une roue de véhicule automobile de type tourisme, n'a pas été représentée sur les figures.

De façon classique, le bandage pneumatique 10 comprend un sommet S prolongé par deux épaules E, deux flancs F et deux bourrelets B. Un seul flanc F, une seule épaule E et un seul bourrelet B sont représentés sur les figures.

Deux tringles 16 (une seule est représentée) sont noyées dans les bourrelets B. Les deux tringles 16 sont agencées symétriquement par rapport à un plan radial médian M du bandage pneumatique.

Chaque tringle 16 est de révolution autour d'un axe de référence. Cet axe de référence, sensiblement parallèle à la direction Y, est sensiblement confondu avec un axe de révolution du bandage pneumatique.

Le sommet S comprend une bande de roulement 20, munie de sculptures 22, ainsi qu'une armature 24. Cette armature 24 comprend des nappes de renforts métalliques ou textiles 26, 28 noyées dans des masses de gomme 32 et 34.

Le bandage pneumatique 10 comprend également une couche de gomme intérieure d'étanchéité 40 ainsi qu'une nappe carcasse 42. La couche 40 délimite au moins en partie le volume interne V du bandage pneumatique 10 et comprend par exemple du caoutchouc butyle. La couche 40 et la nappe 42 sont de forme générale toroïdale et sont toutes deux coaxiales aux tringles 16. Les couche 40 et nappe 42 s'étendent entre les deux tringles annulaires 16 du bandage pneumatique 10 en passant par le sommet S.

Dans le bourrelet B du bandage pneumatique 10, la nappe carcasse 42 comprend une partie repliée 44 autour de la tringle 16. Le bourrelet B comprend également une masse de gomme de protection 46 annulaire destinée à permettre, en partie, l'accrochage radial et axial du bandage pneumatique 10 sur une jante.

Le bourrelet B du bandage pneumatique 10 comprend également une masse de gomme 48 pour le bourrage d'un volume compris entre la partie repliée 44 de la nappe carcasse 42 et une partie 50 de la nappe carcasse 42 en vis-à-vis axialement de la partie repliée 44.

Le bandage pneumatique 10 comprend également, dans son volume interne V, des premier et second produits auto-obturants logés dans le volume interne du bandage pneumatique.

Le premier produit auto-obturant, dit produit auto-obturant solide OS, recouvre une partie prédéterminée de la surface interne du bandage pneumatique 10. La position relative de cette partie prédéterminée dans le bandage pneumatique ne varie sensiblement pas sous l'effet de la gravité.

Dans l'exemple représenté sur les figures 1, 7 et 8, la partie prédéterminée en question est une couche 56 de produit auto-obturant solide du bandage pneumatique 10, qui est disposée radialement de façon interne par rapport à la couche d'étanchéité 40. De cette manière, la partie prédéterminée recouverte par le produit auto-obturant solide OS est une partie en regard du sommet S du pneumatique. En particulier, cette couche 56 de produit auto-obturant solide est appliquée au contact de la couche interne d'étanchéité 40.

La couche 56 de produit auto-obturant solide OS a une épaisseur ES inférieure à 4 mm, de préférence comprise entre 2,5 et 3,5 mm.

Par exemple, le produit auto-obturant solide OS présente, à une fréquence d'excitation de 10 Hz et pour toute valeur de température comprise dans une plage de température comprise entre 10°C et 150°C, un facteur de perte tan δ inférieur à 0.8 et un module de cisaillement dynamique complexe G* compris entre 0.01 et 0.1 MPa.

Le produit auto-obturant solide (OS) peut aussi présenter une dureté Shore00 inférieure à 10 et préférentiellement égale à 0.

Le second produit auto-obturant, dit produit auto-obturant liquide OL, est disposé sous forme d'une masse 58 de produit auto-obturant liquide du bandage pneumatique 10.

Le second produit auto-obturant OL étant sous forme liquide, contrairement à la couche 56 de produit auto-obturant solide OS, la position relative de la masse 58 de produit auto-obturant liquide a tendance à varier sous l'effet de la gravité, et lors du roulage du pneumatique.

Par exemple, la viscosité dynamique du produit auto-obturant liquide OL est inférieure à 1000 Pa.s dans une plage de température comprise entre -15°C et 60°C. Par exemple, cette viscosité dynamique est inférieure à 100 Pa.s. La viscosité dynamique est de préférence supérieure à 0,01 Pa.s.

Lors du roulage, la masse 58 de produit auto-obturant liquide OL a tendance à se répartir sur toute la circonférence du bandage 10 de façon à former une deuxième couche 58 de produit auto-obturant OL. La figure 1 représente notamment l'état des couches 56,58 de produit auto-obturant solide OS et liquide OL.

La couche 58 de produit auto-obturant liquide OL a de préférence une épaisseur équivalente $e = \dfrac{m}{LD\gamma}$ comprise entre 0,3 et 2,5mm. Dans la relation $e = \dfrac{m}{LD\gamma}$ :

$m$ est la masse de produit auto-obturant liquide OL,
$L$ est la largeur de la bande de roulement 20 du bandage pneumatique 10,
$D$ est le développement interne du bandage pneumatique 10, et
$\gamma$ est la densité du produit auto-obturant liquide OL.

Par exemple, l'épaisseur équivalente e du produit auto-obturant liquide est comprise entre 0,4 et 1,5 mm, de préférence entre 0,5 et 1,2 mm.

Avantageusement, pour améliorer le colmatage d'une perforation, le produit auto-obturant liquide OL comprend des agents de colmatage tels que des fibres et des particules de caoutchouc dispersées dans un solvant liquide, tel que de l'eau. Par exemple, le produit auto-obturant liquide comporte un latex de caoutchouc naturel dans une base aqueuse.

De manière à éviter que le produit auto-obturant liquide OL ne gèle, il comprend dans sa composition un antigel à base de glycol.

Toujours de façon à améliorer les performances de colmatage, le produit auto-obturant liquide OL comprend en outre des particules de diamètre compris entre 10 et 800 μm. Il peut s'agir par exemple de poudrettes de caoutchouc obtenues par broyage de pneumatiques usagés. Le diamètre de plus de 70% de ces particules en nombre est de préférence compris entre 10 et 300 μm.

On va maintenant détailler la composition du produit auto-obturant solide OS.

Dans ce qui suit, sauf indication contraire, tous les pourcentages (%) indiqués sont des % en masse. Par ailleurs, dans les compositions élastomère de la présente description, le sigle « pce » signifie parties en poids pour cent parties d'élastomère solide.

Le produit auto-obturant solide OS comprend un élastomère majoritaire choisi parmi :

- un élastomère diénique insaturé,

- un élastomère à base de butyle,
- un élastomère thermoplastique, par exemple un élastomère styrénique ou un copolymère thermoplastique à blocs polystyrène et polyisobutylène, et
- un polyuréthane.

Ainsi, dans un premier mode de réalisation de l'invention, l'élastomère majoritaire du produit auto-obturant solide OS est un élastomère diénique insaturé. Dans ce premier mode de réalisation, le produit auto-obturant solide OS comprend en outre entre 30 et 90 pce d'une résine hydrocarbonée et entre 0 et 30 pce d'une charge et entre 0,5 et 15 pce de polysulfure de thiurame.

Dans une deuxième mode de réalisation de l'invention, l'élastomère majoritaire du produit auto-obturant solide OS est un élastomère diénique insaturé. Dans ce deuxième mode de réalisation, le produit auto-obturant solide OS comprend en outre entre 30 et 90 pce d'une résine hydrocarbonée et entre 0 et 30 pce d'une charge et un plastifiant liquide à un taux compris entre 0 et 60 pce. La température de transition vitreuse Tg de ce plastifiant liquide sera par exemple inférieure à -20°C.

Dans un troisième mode de réalisation de l'invention, l'élastomère majoritaire du produit auto-obturant solide OS est un élastomère à base de butyle. Par exemple, l'élastomère majoritaire est un caoutchouc butyle de haute masse moléculaire, et le produit auto-obturant solide OS comprend en outre un élastomère butyle de basse masse moléculaire. La masse moléculaire en nombre du caoutchouc butyle de haute masse moléculaire sera notamment supérieure à 120 000 g/ml, et de préférence supérieure à 150 000 g/ml.

Dans d'autres modes de réalisation, l'élastomère majoritaire du produit auto-obturant solide OS est un thermoplastique, par exemple un élastomère styrénique ou un copolymère thermoplastique à blocs polystyrène et polyisobutylène.

Ainsi, dans un quatrième mode de réalisation de l'invention, l'élastomère majoritaire du produit auto-obturant solide OS est un élastomère styrénique. Dans ce quatrième mode de réalisation, le produit auto-obturant solide OS comprend en outre plus de 100 pce d'une huile d'extension, par exemple plus de 250 pce de cette huile, et plus de 20 pce d'une résine hydrocarbonée. La température de transition vitreuse Tg de cette résine hydrocarbonée sera par exemple supérieure à 0°C.

Dans un cinquième mode de réalisation de l'invention, l'élastomère majoritaire du produit auto-obturant solide OS est un copolymère thermoplastique à blocs polystyrène et polyisobutylène. Dans ce cinquième mode de réalisation, le produit auto-obturant solide OS comprend en outre au moins 100 pce d'une huile d'extension.

On va maintenant expliquer, en référence aux figures 2 à 8, les propriétés du bandage pneumatique 10 et la synergie apportée par la présence complémentaire des deux produits auto-obturants solide OS et liquide OL. Sur ces figures, les flèches représentent le sens dans lequel s'exerce la gravité.

On a représenté à la figure 2 (art antérieur) un bandage pneumatique 60 selon l'art antérieur, muni d'une bande de roulement 61 et d'une couche de produit auto-obturant solide 62, après avoir été percé par une vis 64, causant une perforation 66 du bandage.

Comme on peut le voir à la figure 3 (art antérieur), après l'arrachage de la vis 64, le produit auto-obturant solide 62 comble en partie la perforation 66, mais du fait de la géométrie complexe de la vis 64, un interstice 68 subsiste même une heure après la perforation. En effet, la viscosité du produit auto-obturant solide OS fait qu'il ne s'échappe pas hors de la perforation 66, mais l'empêche d'atteindre certaines zones de la perforation 66.

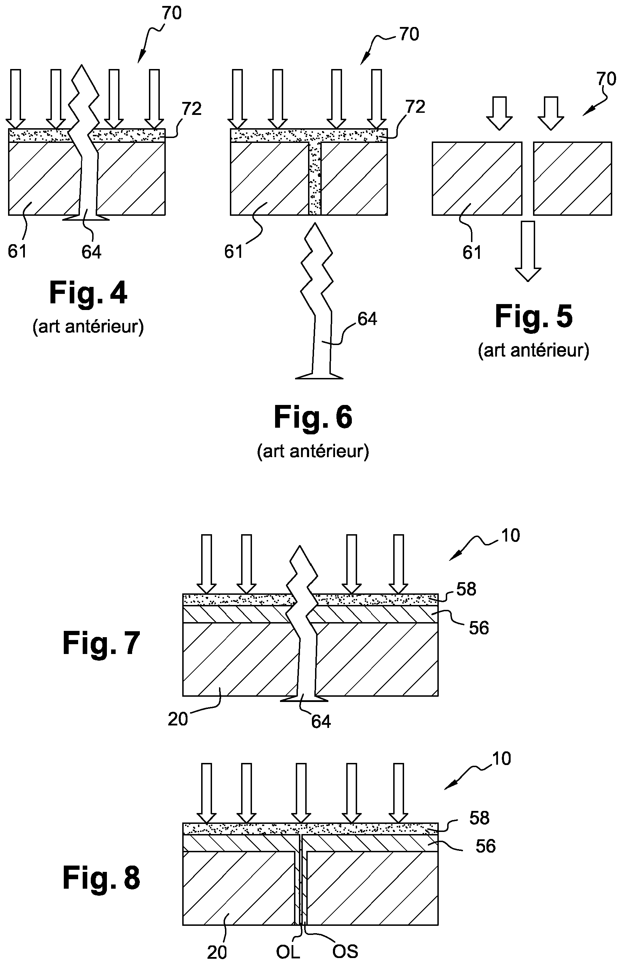

On a représenté à la figure 4 (art antérieur) un bandage pneumatique 70 selon l'art antérieur, muni d'une bande de roulement 61 et d'une couche de produit auto-obturant liquide 72, après avoir été percé par une vis 64, causant une perforation 66 du bandage.

Comme on peut le voir à la figure 5 (art antérieur), après l'arrachage de la vis 64, le produit auto-obturant liquide 62 comble totalement la perforation 66. En effet, l'état liquide du produit auto-obturant lui permet de s'insérer dans tout le volume de la perforation 66 malgré la forme complexe de la vis 64. En revanche, comme illustré à la figure 6, une fois la vis arrachée du bandage pneumatique 70, plus rien ne retient le produit auto-obturant liquide 62, qui s'écoule hors du bandage 70 et ne comble plus du tout la perforation 66.

Ces inconvénients sont évités grâce au bandage pneumatique 10 selon l'invention illustré schématiquement aux figures 7 et 8.

En effet, comme rappelé à la figure 7, le bandage pneumatique 10 comprend la bande de roulement 20, la couche 56 de produit auto-obturant solide OS, et la couche 58 de produit auto-obturant liquide OL.

Ainsi, comme on peut le voir à la figure 8, lorsque la vis 64 est retirée du bandage pneumatique 10, la présence du produit auto-obturant solide OS fait que la perforation 66 reste comblée, car le produit auto-obturant liquide OL ne s'échappe pas hors du bandage 10. En outre, l'interstice 68, qui aurait subsisté si le bandage n'avait contenu qu'un produit auto-obturant solide, est comblé par le produit auto-obturant liquide OL qui peut s'y insérer grâce au fait qu'il est à l'état liquide.

Des tests ont permis d'établir un tableau comparatif des performances des bandages pneumatiques de l'art antérieur et du bandage pneumatique selon l'invention face à un test de roulage sur un support parsemé de vis de 40mm de longueur.

Plus précisément, le tableau ci-dessous permet de comparer les performances :

- d'un premier bandage pneumatique comprenant uniquement un produit auto-obturant solide ayant une composition incluant du caoutchouc naturel, un plastifiant, et une résine tel que celui illustré aux figures 2 et 3 ;
- d'un deuxième bandage pneumatique comprenant uniquement un produit auto-obturant liquide vendu dans le commerce sous l'appellation produit anti-crevaison, tels que celui illustré aux figures 4 à 6 ; et
- d'un troisième bandage pneumatique conforme à l'invention (notamment que celui illustré aux figures 1 et 7 à 8, à savoir muni de deux produits auto-obturants solide et liquide selon l'une des compositions évoquées ci-dessus.

Le tableau ci-après indique le taux de couverture des différents bandages, calculé à différents moments du test de roulage. On définit ici le taux de couverture comme étant le résultat du calcul, défini en pourcentage, du nombre d'objets perforants ne présentant pas de fuite, divisé par le nombre total d'objets perforants insérés dans le pneumatique testé.

|  | Bandage pneumatique muni uniquement d'un produit auto-obturant solide (1,2 kg) | Bandage pneumatique muni uniquement d'un produit auto-obturant liquide (1kg de produit) | Bandage pneumatique selon l'invention (OS : 1,2 kg, OL : 0,6 kg |
|---|---|---|---|
| % Taux de couverture après perforation | 10 | 100 | 83 |
| % Taux de couverture après perforation et 6 h de roulage à v=70 km/h) | 50 | 100 | 92,5 |
| % Taux de couverture après arrachage à un instant T | 70 | 0 | 75 |
| % Taux de couverture après arrachage à un instant T+1h | 70 | 0 | 90 |

On a pu observer, comme résumé à la première ligne du tableau, que le taux de couverture d'un bandage pneumatique muni uniquement d'un produit auto-obturant solide est de 10% juste après une perforation. Ceci s'explique par le fait que le produit auto-obturant solide met un certain temps avant de fluer et de combler la perforation. Un bandage pneumatique muni uniquement d'un produit auto-obturant liquide bénéficie d'un taux de couverture de 100%, car l'état liquide permet au produit auto-obturant de combler rapidement la perforation.

Puis, après un roulage de 6 h à une vitesse de 70 km/h, comme résumé à la deuxième ligne du tableau, le taux de couverture du bandage muni uniquement d'un produit auto-obturant solide augmente car le produit a pu fluer et combler en partie la perforation. De même, le bandage pneumatique selon l'invention augmente son taux de couverture. Le taux de couverture d'un bandage pneumatique muni uniquement d'un produit auto-obturant liquide reste de 100%.

En revanche, lorsqu'on arrache la vis, comme on peut le constater en lisant la troisième ligne du tableau, le taux de couverture du bandage pneumatique muni uniquement d'un produit auto-obturant liquide tombe à zéro car plus rien ne retient le produit auto-obturant liquide qui s'écoule hors du bandage. Tel n'est pas le cas du bandage pneumatique muni uniquement d'un produit auto-obturant solide, qui a pu fluer tout en restant dans le bandage en place malgré l'arrachage de la vis, et permet un taux de couverture de 70%. Le bandage pneumatique selon l'invention bénéficie, lui, d'un taux de couverture de 75%. On constate donc que les performances de ce bandage ne sont pas la simple juxtaposition ou addition des performances d'un produit auto-obturant solide seul et d'un produit auto-obturant liquide seul, car il permet d'obtenir une amélioration du taux de couverture juste après l'arrachage supérieur (75% au lieu de 70%). Il y a donc bien synergie entre les deux types de produits.

Cet effet de synergie est encore plus notable lorsqu'on observe le taux de couverture une heure après l'arrachage de la vis. En effet, alors que ni le bandage pneumatique muni uniquement d'un produit auto-obturant solide, ni le bandage pneumatique muni uniquement d'un produit auto-obturant liquide n'augmentent leur taux de couverture, le bandage pneumatique selon l'invention augmente le sien jusqu'à 90%, permettant un gain de 20% du taux de couverture. A nouveau, ce taux n'est pas le fruit d'une simple juxtaposition ou addition des performances des produits auto-obturants liquide ou solide seuls, mais bien le résultat d'une synergie entre ces deux produits complémentaires.

On va maintenant décrire des procédés de fabrication d'un ensemble d'un bandage pneumatique et d'une roue, le bandage de l'ensemble étant par exemple selon l'un des modes de réalisation évoqués ci-dessus.

Dans un premier procédé de fabrication, on loge le produit auto-obturant liquide OL dans le bandage pneumatique 10 avant son montage sur la roue.

Dans un deuxième procédé de fabrication, on introduit le produit auto-obturant liquide OL dans le bandage pneumatique 10 après son montage dans la roue par une valve de gonflage du bandage pneumatique 10. L'introduction du produit auto-obturant liquide OL se fait également avant le gonflage du bandage pneumatique 10.

On va maintenant décrire un procédé de mise en place d'un système auto-obturant dans un ensemble d'un bandage pneumatique et d'une roue, le bandage de l'ensemble étant par exemple selon l'un des modes de réalisation évoqués ci-dessus.

Au cours de ce procédé, on commence par prendre un pneumatique équipé d'une couche comprenant le produit auto-obturant solide OS.

Puis, on monte le pneumatique sur une jante de roue pour obtenir un ensemble d'un pneumatique et d'une roue définissant un volume interne V. On introduit ensuite, dans le volume interne V, le produit auto-obturant liquide OL.

L'introduction du produit auto-obturant liquide OL dans le volume interne V du pneumatique se fait avant le montage du pneumatique sur la jante de roue.

Si l'ensemble d'un bandage pneumatique 10 et d'une roue est muni d'une valve de gonflage, on introduit le produit auto-obturant liquide OL après le montage du pneumatique sur la jante de roue à travers ladite valve de gonflage.

L'invention n'est pas limitée aux modes de réalisations évoqués ci-dessus et d'autres modes de réalisation apparaîtront à l'homme du métier. Par exemple, on pourra envisager d'autres combinaisons que celles décrites d'éléments contenus dans les compositions évoquées ci-dessus. L'invention est définie par les revendications qui suivent.

## Revendications

**1.** Ensemble d'un bandage pneumatique et d'une roue, le bandage pneumatique (10) étant monté sur la roue, **caractérisé en ce qu'**il comprend des premier et second produits auto-obturants logés dans le volume interne (V) du bandage pneumatique (10),
le premier produit auto-obturant, dit produit auto-obturant solide (OS), formant une couche (56) contre une partie prédéterminée de la surface interne du bandage pneumatique (10), la position relative de cette partie prédéterminée dans le bandage pneumatique (10) ne variant sensiblement pas sous l'effet de la gravité,
le second produit auto-obturant, dit produit auto-obturant liquide (OL), étant sous forme liquide, la position relative du second produit variant sous l'effet de la gravité dans le volume interne (V) du bandage pneumatique (10) pour permettre d'agir de façon simultanée avec le premier produit auto-obturant.

**2.** Ensemble selon la revendication 1, dans lequel le produit auto-obturant liquide (OL) a une épaisseur équivalente e comprise entre 0,3 et 2,5mm, cette épaisseur équivalente étant définie par la relation $e = \dfrac{m}{LD\gamma}$ dans laquelle :

   $m$ est la masse de produit auto-obturant liquide (OL),
   $L$ est la largeur de la bande de roulement du bandage pneumatique (10),
   $D$ est le développement interne du bandage pneumatique (10), et
   $\gamma$ est la densité du produit auto-obturant liquide.

**3.** Ensemble d'un bandage pneumatique et d'une roue selon la revendication 2, dans lequel l'épaisseur équivalente du produit auto-obturant liquide est comprise entre 0,4 et 1,5 mm, de préférence entre 0,5 et 1,2 mm.

**4.** Ensemble d'un bandage pneumatique et d'une roue selon l'une quelconque des revendications précédentes, dans lequel la viscosité dynamique du produit auto-obturant liquide (OL) est inférieure à 1000 Pa.s dans une plage de température comprise entre -15°C et 60°C, par exemple inférieure à 100 Pa.s.

**5.** Ensemble d'un bandage pneumatique et d'une roue selon l'une quelconque des revendications précédentes, dans lequel la couche de produit auto-obturant solide (OS) a une épaisseur inférieure à 4 mm, de préférence comprise entre 2,5 et 3,5 mm.

6. Ensemble d'un bandage pneumatique et d'une roue selon l'une quelconque des revendications précédentes, dans lequel la partie prédéterminée recouverte par le produit auto-obturant solide (OS) est une partie en regard du sommet (S) du pneumatique.

7. Ensemble d'un bandage pneumatique et d'une roue selon l'une quelconque des revendications précédentes, dans lequel le produit auto-obturant liquide (OL) comprend des agents de colmatage tels que des fibres et des particules de caoutchouc dispersées dans un solvant liquide, le solvant liquide comportant par exemple de l'eau.

8. Ensemble d'un bandage pneumatique et d'une roue selon la revendication 6, dans lequel le produit auto-obturant liquide (OL) comporte un latex de caoutchouc naturel dans une base aqueuse.

9. Ensemble d'un bandage pneumatique et d'une roue selon l'une quelconque des revendications précédentes, dans lequel le produit auto-obturant liquide (OL) comprend un antigel.

10. Ensemble d'un bandage pneumatique et d'une roue selon la revendication 9, dans lequel l'antigel est à base de glycol.

11. Ensemble d'un bandage pneumatique et d'une roue selon l'une des revendications précédentes, dans lequel le produit auto-obturant liquide (OL) comprend des particules de diamètre compris entre 10 et 800 $\mu$m, par exemple des poudrettes de caoutchouc obtenues par broyage de pneumatiques usagés, le diamètre de plus de 70% des particules en nombre étant de préférence compris entre 10 et 300 $\mu$m.

12. Ensemble d'un bandage pneumatique et d'une roue selon l'une quelconque des revendications précédentes, dans lequel le produit auto-obturant solide (OS) comprend un élastomère majoritaire choisi parmi :

- un élastomère diénique insaturé,
- un élastomère à base de butyle,
- un élastomère thermoplastique, par exemple un élastomère styrénique ou un copolymère thermoplastique à blocs polystyrène et polyisobutylène, et
- un polyuréthane.

13. Procédé de fabrication d'un ensemble d'un bandage pneumatique (10) et d'une roue, **caractérisé en ce que** l'ensemble est selon l'une quelconque des revendications 1 à 12, **et en ce qu'on** loge le produit auto-obturant liquide (OL) dans le bandage pneumatique (10) avant son montage sur la roue.

14. Procédé de fabrication d'un ensemble d'un bandage pneumatique (10) et d'une roue, **caractérisé en ce que** l'ensemble est selon l'une quelconque des revendications 1 à 12 et **en ce qu'on** introduit le produit auto-obturant liquide (OL) dans le bandage pneumatique (10) après son montage dans la roue par une valve de gonflage du bandage pneumatique (10) et avant le gonflage du bandage pneumatique (10).

15. Procédé de mise en place d'un système auto-obturant dans un ensemble d'un bandage pneumatique (10) et d'une roue, **caractérisé en ce que** l'ensemble est selon l'une quelconque des revendications 1 à 12 **et en ce qu'il** comporte les étapes suivantes :

- on prend un pneumatique équipé d'une couche (56) comprenant le produit auto-obturant solide (OS) ;
- on monte le pneumatique sur une jante de roue pour obtenir un ensemble d'un pneumatique et d'une roue définissant un volume interne (V) ;
- on introduit dans le volume interne (V) le produit auto-obturant liquide (OL).

**Patentansprüche**

1. Anordnung aus einem Luftreifen und einem Rad, wobei der Luftreifen (10) auf dem Rad montiert ist, **dadurch gekennzeichnet, dass** sie ein erstes und ein zweites selbstdichtendes Produkt umfasst, die im Innenvolumen (V) des Luftreifens (10) aufgenommen sind, wobei das erste selbstdichtende Produkt, festes selbstdichtendes Produkt (OS) genannt, eine Schicht (56) auf einem vorbestimmten Teil der Innenfläche des Luftreifens (10) bildet, wobei sich die relative Position dieses vorbestimmten Teils im Luftreifen (10) unter dem Einfluss der Schwerkraft nicht wesentlich ändert,
wobei das zweite selbstdichtende Produkt, flüssiges selbstdichtendes Produkt (OL) genannt, in flüssiger Form vorliegt, wobei sich die relative Position des zweiten Produkts im Innenvolumen (V) des Luftreifens (10) unter dem Einfluss der Schwerkraft ändert, um zu ermöglichen, dass es gleichzeitig mit dem ersten selbstdichtenden Produkt wirkt.

2. Anordnung nach Anspruch 1, wobei das flüssige selbstdichtende Produkt (OL) eine äquivalente Dicke e zwischen 0,3 und 2,5 mm aufweist, wobei diese äquivalente Dicke durch die Beziehung $e = \dfrac{m}{LD\gamma}$ definiert ist, wobei:

  m die Masse des flüssigen selbstdichtenden Produkts (OL) ist,
  L die Breite des Laufstreifens des Luftreifens (10) ist,
  D die Innenabwicklung des Luftreifens (10) ist, und
  $\gamma$ die Dichte des flüssigen selbstdichtenden Produkts ist.

3. Anordnung aus einem Luftreifen und einem Rad nach Anspruch 2, wobei die äquivalente Dicke des flüssigen selbstdichtenden Produkts zwischen 0,4 und 1,5 mm, vorzugsweise zwischen 0,5 und 1,2 mm liegt.

4. Anordnung aus einem Luftreifen und einem Rad nach einem der vorhergehenden Ansprüche, wobei die dynamische Viskosität des flüssigen selbstdichtenden Produkts (OL) in einem Temperaturbereich zwischen -15 °C und 60 °C kleiner als 1000 Pa.s, zum Beispiel kleiner als 100 Pa.s ist.

5. Anordnung aus einem Luftreifen und einem Rad nach einem der vorhergehenden Ansprüche, wobei die Schicht des festen selbstdichtenden Produkts (OS) eine Dicke kleiner als 4 mm, vorzugsweise zwischen 2,5 und 3,5 mm aufweist.

6. Anordnung aus einem Luftreifen und einem Rad nach einem der vorhergehenden Ansprüche, wobei der vorbestimmte Teil, der mit dem festen selbstdichtenden Produkt (OS) bedeckt ist, ein Teil gegenüber dem Scheitel (S) des Reifens ist.

7. Anordnung aus einem Luftreifen und einem Rad nach einem der vorhergehenden Ansprüche, wobei das flüssige selbstdichtende Produkt (OL) Verdichtungsmittel umfasst, wie etwa Fasern und Kautschukpartikel, die in einem flüssigen Lösungsmittel dispergiert sind, wobei das flüssige Lösungsmittel zum Beispiel Wasser umfasst.

8. Anordnung aus einem Luftreifen und einem Rad nach Anspruch 6, wobei das flüssige selbstdichtende Produkt (OL) ein Naturkautschuklatex in einer wässrigen Lösung umfasst.

9. Anordnung aus einem Luftreifen und einem Rad nach einem der vorhergehenden Ansprüche wobei das flüssige selbstdichtende Produkt (OL) ein Frostschutzmittel umfasst.

10. Anordnung aus einem Luftreifen und einem Rad nach Anspruch 9, wobei das Frostschutzmittel auf Glykol basiert.

11. Anordnung aus einem Luftreifen und einem Rad nach einem der vorhergehenden Ansprüche, wobei das flüssige selbstdichtende Produkt (OL) Partikel mit einem Durchmesser zwischen 10 und 800 $\mu$m umfasst, zum Beispiel Kautschukpulver, das durch Zerkleinerung von Altreifen gewonnen wurde, wobei der Durchmesser eines zahlenmäßigen Anteils der Partikel von mehr als 70 % zwischen 10 und 300 $\mu$m liegt.

12. Anordnung aus einem Luftreifen und einem Rad nach einem der vorhergehenden Ansprüche, wobei das feste selbstdichtende Produkt (OS) als Hauptbestandteil ein Elastomer umfasst, das ausgewählt ist aus:

  - einem ungesättigten Dienelastomer,
  - einem Elastomer auf Butylbasis,
  - einem thermoplastischen Elastomer, zum Beispiel einem Styrolelastomer, oder einem thermoplastischen Polystyrol- und Polyisobutylen-Blockcopolymer, und
  - einem Polyurethan.

**13.** Verfahren zur Herstellung einer Anordnung aus einem Luftreifen (10) und einem Rad, **dadurch gekennzeichnet, dass** die Anordnung eine Anordnung nach einem der Ansprüche 1 bis 12 ist, und dadurch, dass das flüssige selbstdichtende Produkt (OL) in dem Luftreifen (10) vor dessen Montage auf dem Rad untergebracht wird.

**14.** Verfahren zur Herstellung einer Anordnung aus einem Luftreifen (10) und einem Rad, **dadurch gekennzeichnet, dass** die Anordnung eine Anordnung nach einem der Ansprüche 1 bis 12 ist, und dadurch, dass das flüssige selbstdichtende Produkt (OL) in den Luftreifen (10) nach dessen Montage auf dem Rad und vor dem Aufpumpen des Luftreifens (10) über ein Ventil zum Aufpumpen des Luftreifens (10) eingeleitet wird.

**15.** Verfahren zur Anbringung eines selbstdichtenden Systems in einer Anordnung aus einem Luftreifen (10) und einem Rad, **dadurch gekennzeichnet, dass** die Anordnung eine Anordnung nach einem der Ansprüche 1 bis 12 ist, und dadurch, dass es die folgenden Schritte umfasst:

- Es wird ein Reifen bereitgestellt, der mit einer Schicht (56) ausgestattet ist, die das feste selbstdichtende Produkt (OS) umfasst;
- der Reifen wird auf einer Radfelge montiert, um eine Anordnung aus einem Reifen und einem Rad zu erhalten, die ein Innenvolumen (V) definiert;
- in das Innenvolumen (V) wird das flüssige selbstdichtende Produkt (OL) eingeleitet.

**Claims**

**1.** Assembly of a pneumatic tyre and of a wheel, the pneumatic tyre (10) being fitted to the wheel, **characterized in that** it comprises first and second self-sealing products housed in the internal volume (V) of the pneumatic tyre (10),
the first self-sealing product, referred to as solid self-sealing product (OS), forming a layer (56) against a predetermined part of the internal surface of the pneumatic tyre (10), the relative position of this predetermined part in the pneumatic tyre (10) not substantially varying under the effect of gravity,
the second self-sealing product, referred to as liquid self-sealing product (OL), being in the liquid form, the relative position of the second product varying under the effect of gravity in the internal volume (V) of the pneumatic tyre (10) in order to make it possible to act simultaneously with the first self-sealing product.

**2.** Assembly according to Claim 1, in which the liquid self-sealing product (OL) has an equivalent thickness e of between 0.3 and 2.5 mm, this equivalent thickness being defined by the relationship $e = \frac{w}{WD\gamma}$, in which:

$w$ is the weight of liquid self-sealing product (OL),
$W$ is the width of the tread of the pneumatic tyre (10),
$D$ is the internal development of the pneumatic tyre (10), and
$\gamma$ is the density of the liquid self-sealing product.

**3.** Assembly of a pneumatic tyre and of a wheel according to Claim 2, in which the equivalent thickness of the liquid self-sealing product is between 0.4 and 1.5 mm, preferably between 0.5 and 1.2 mm.

**4.** Assembly of a pneumatic tyre and of a wheel according to any one of the preceding claims, in which the dynamic viscosity of the liquid self-sealing product (OL) is less than 1000 Pa.s within a temperature range of between -15°C and 60°C, for example of less than 100 Pa.s.

**5.** Assembly of a pneumatic tyre and of a wheel according to any one of the preceding claims, in which the layer of solid self-sealing product (OS) has a thickness of less than 4 mm, preferably of between 2.5 and 3.5 mm.

**6.** Assembly of a pneumatic tyre and of a wheel according to any one of the preceding claims, in which the predetermined part covered with the solid self-sealing product (OS) is a part facing the crown (S) of the pneumatic tyre.

**7.** Assembly of a pneumatic tyre and of a wheel according to any one of the preceding claims, in which the liquid self-sealing product (OL) comprises filling-in agents, such as rubber particles and fibres, dispersed in a liquid solvent, the liquid solvent comprising, for example, water.

8. Assembly of a pneumatic tyre and of a wheel according to Claim 6, in which the liquid self-sealing product (OL) comprises a latex of natural rubber in an aqueous base.

9. Assembly of a pneumatic tyre and of a wheel according to any one of the preceding claims, in which the liquid self-sealing product (OL) comprises an antifreeze.

10. Assembly of a pneumatic tyre and of a wheel according to Claim 9, in which the antifreeze is based on glycol.

11. Assembly of a pneumatic tyre and of a wheel according to one of the preceding claims, in which the liquid self-sealing product (OL) comprises particles with a diameter of between 10 and 800 μm, for example crumb rubbers obtained by grinding worn pneumatic tyres, the diameter of more than 70% by number of the particles preferably being between 10 and 300 μm.

12. Assembly of a pneumatic tyre and of a wheel according to any one of the preceding claims, in which the solid self-sealing product (OS) comprises a predominant elastomer chosen from:

    - an unsaturated diene elastomer,
    - a butyl-based elastomer,
    - a thermoplastic elastomer, for example a styrene elastomer or a thermoplastic copolymer comprising polystyrene and polyisobutylene blocks, and
    - a polyurethane.

13. Process for the manufacture of an assembly of a pneumatic tyre (10) and of a wheel, **characterized in that** the assembly is according to any one of Claims 1 to 12 **and in that** the liquid self-sealing product (OL) is housed in the pneumatic tyre (10) before it is fitted to the wheel.

14. Process for the manufacture of an assembly of a pneumatic tyre (10) and of a wheel, **characterized in that** the assembly is according to any one of Claims 1 to 12 **and in that** the liquid self-sealing product (OL) is introduced into the pneumatic tyre (10) after it has been fitted to the wheel via a valve for inflation of the pneumatic tyre (10) and before the inflation of the pneumatic tyre (10).

15. Process for deploying a self-sealing system in an assembly of a pneumatic tyre (10) and of a wheel, **characterized in that** the assembly is according to any one of Claims 1 to 12 **and in that** it comprises the following stages:

    - a pneumatic tyre equipped with a layer (56) comprising the solid self-sealing product (OS) is taken;
    - the pneumatic tyre is fitted to a wheel rim in order to obtain an assembly of a pneumatic tyre and of a wheel defining an internal volume (V);
    - the liquid self-sealing product (OL) is introduced into the internal volume (V).

**Fig. 1**

**Fig. 2**
(art antérieur)

**Fig. 3**
(art antérieur)

70

70

70

72

72

61

64

61

61

64

**Fig. 4**

(art antérieur)

**Fig. 5**

(art antérieur)

**Fig. 6**

(art antérieur)

10

58

56

**Fig. 7**

20

64

10

58

56

**Fig. 8**

20    OL    OS

**EP 3 554 860 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012052663 A
- WO 2011148853 A
- FR 2923750